## Europäisches Patentamt
## European Patent Office
## Office européen des brevets

(19)

(11) Numéro de publication: **0 084 308**
**B1**

(12)

# FASCICULE DE BREVET EUROPEEN

(45) Date de publication du fascicule du brevet:
**31.07.85**

(51) Int. Cl.⁴: **F 25 B 9/02**, G 05 D 23/02

(21) Numéro de dépôt: **83100002.1**

(22) Date de dépôt: **03.01.83**

(54) **Dispositif de régulation d'un réfrigérateur à effet Joule-Thomson.**

(30) Priorité: **19.01.82 FR 8200756**

(43) Date de publication de la demande:
**27.07.83 Bulletin 83/30**

(45) Mention de la délivrance du brevet:
**31.07.85 Bulletin 85/31**

(84) Etats contractants désignés:
**CH DE GB IT LI SE**

(56) Documents cités:
**EP - A - 0 005 048**
**EP - A - 0 020 111**
**FR - A - 1 267 447**
**FR - A - 2 176 544**
**FR - A - 2 360 848**
**FR - A - 2 477 406**
**US - A - 2 418 671**
**US - A - 3 415 077**
**US - A - 3 714 796**
**US - A - 3 800 552**
**US - A - 3 885 939**
**US - A - 3 913 581**

(73) Titulaire: **SOCIETE ANONYME DE TELECOMMUNICATIONS, 40 avenue de New York, F-75116 Paris (FR)**

(72) Inventeur: **Albagnac, René Denis Michel, 34, rue de Picpus, F-75012 Paris (FR)**

(74) Mandataire: **Casalonga, Alain et al, BUREAU D.A. CASALONGA OFFICE JOSSE & PETIT Baaderstrasse 12-14, D-8000 München 5 (DE)**

## Description

L'invention se rapporte à un dispositif de régulation d'un réfrigérateur à effet Joule-Thomson, comprenant un conduit d'amenée d'un fluide réfrigérant sous pression auquel est raccordé un étrangleur débouchant dans une chambre de détente et réfrigération qui communique avec un passage d'échange thermique avec ledit conduit d'amenée, cet étrangleur étant sousmis à une régulation de débit décroissante en fonction de l'abaissement de la température de réfrigération.

Un tel réfrigérateur peut être à circuit fermé ou ouvert, et il trouve notamment une application particulière en circuit ouvert pour les systèmes d'armes utilisant des projectiles à tête de guidage répondant aux infrarouges, dans laquelle est utilisée une cellule détectrice sensible, qui doit pouvoir être refroidie rapidement à basse température, en principe celle de liquéfaction du fluide réfrigérant, et pendant un certain temps, d'où l'intérêt d'une régulation telle que celle évoquée pour réduire autant que possible la consommation de fluide réfrigérant, voire le poids du projectile lorsqu'il est à alimentation autonome.

On connaît déjà, notamment d'après le document FR-A-2 176 544, des dispositifs établissant à cet effet une régulation du type tout ou rien de la section de passage contrôlée de l'étrangleur, modérée par le maintien d'une ouverture minimale permanente de passage du fluide dans l'étrangleur, évaluée de façon à compenser les pertes thermiques du réfrigérateur. Mais cette évaluation prédéterminée ne peut être parfaite et s'ajuster aux conditions variables qui gouverment les pertes thermiques dans les diverses conditions d'emploi du réfrigérateur que l'on peut rencontrer ou que peut rencontrer un projectile équipé de ce dernier.

On connaît également, d'après le document FR-A-2 477 406, une cryosonde chirurgicale où il est question d'autorégulation, mais limitée au débit gazeux, avec pour but de réaliser une mise en froid rapide suivie d'une phase d'entretien, sans comporter les particularités de la présente invention.

On connaît enfin, d'après le document US-A-3 415 077, un réfrigérateur avec possibilité de liquéfaction dans l'échangeur intermédiaire, mais, contrairement à l'invention, il ne s'agit pas là d'une autorégulation de débit minimal, et en outre cela concerne un dispositif hybride à évaporation d'hélium liquide sous basse pression.

La présente invention a pour objet un dispositif perfectionné de régulation d'un réfrigérateur Joule-Thomson, conçu pour mieux réguler la puissance frigorifique apportée en fonctionnement, c'est-à-dire pour mieux l'adapter aux besoins réels, sans risque d'insuffisance (ce qui est préjudiciable à la détection reposant sur la basse température créée), et sans consommation de fluide excessive autre que celle juste nécessaire, (ce qui est favorable du point de vue autonomie ou poids du projectile).

Essentiellement, à cet effet, le dispositif de régulation selon l'invention d'un réfrigérateur à effet Joule-Thomson comprenant un conduit d'amenée d'un fluide réfrigérant gazeux sous pression raccordé à un étrangleur débouchant dans une chambre de détente et liquéfaction du fluide communiquant avec un passage d'évacuation du fluide réfrigérant qui est en échange thermique avec ledit conduit d'amenée, ledit étrangleur étant à section de passage décroissante en fonction de l'abaissement de la température de réfrigération et à ouverture minimale de passage prédéterminée, est caractérisé en ce que, pour le domaine de pression mis en jeu, l'ouverture minimale de l'étrangleur et les relations d'échange thermique avec ledit conduit d'amenée sont telles qu'en phase de fonctionnement à ouverture minimale, une phase de liquéfaction prend naissance dans le conduit d'amenée en amont de l'étrangleur pour provoquer une auto-régulation du débit de fluide juste nécessaire à l'entretien de la liquéfaction dans la chambre de détente et liquéfaction.

Une forme de réalisation d'un dispositif de régulation selon l'invention est d'ailleurs ci-après décrite à titre d'exemple et en référence au dessin annexé, dans lequel:

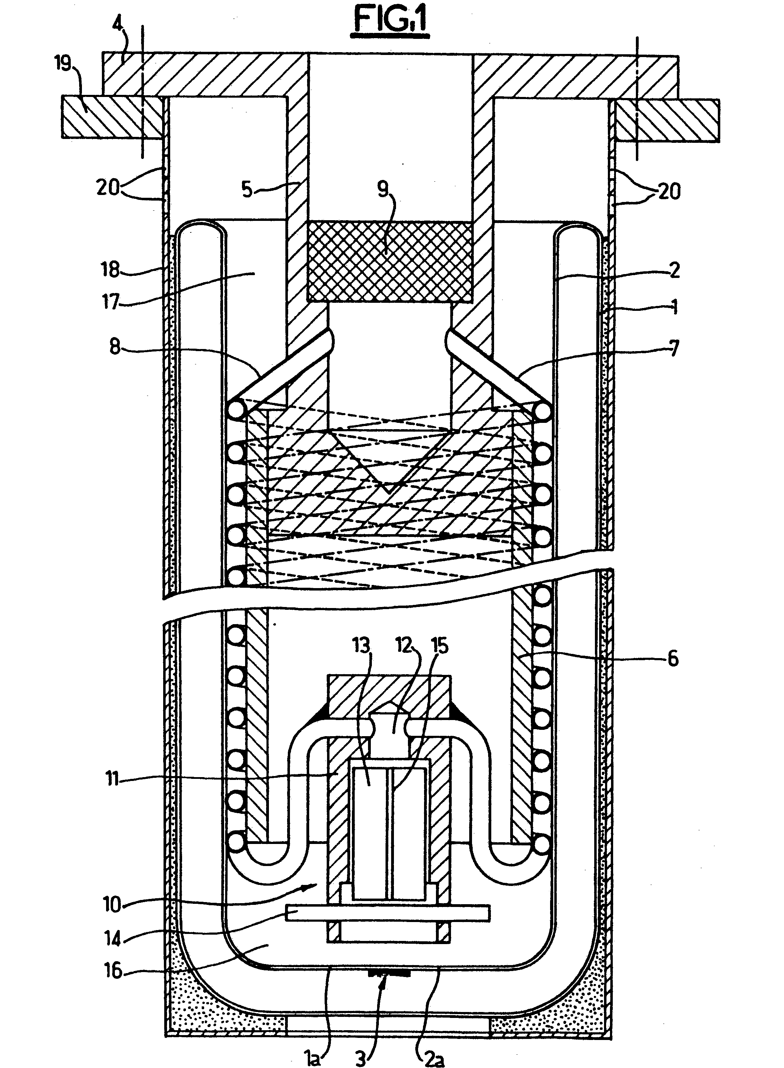

la fig. 1 est une vue en coupe axiale d'un réfrigérateur à effet Joule-Thomson et à régulation selon l'invention;

les fig. 2, 3 et 4 sont des diagrammes de débit de fluide gazeux correspondant à plusieurs cas de construction d'un réfrigérateur à effet Joule-Thomson.

Le réfrigérateur représenté comprend un vase de Dewar à double paroi 1, 2 dont la paroi de fond interne 2a est pourvue, face à la paroi de fond la laissant passer le rayonnement infrarouge dans l'axe du Dewar, d'une cellule détectrice 3 sensible aux infrarouges et à conducteurs de connexion non représentés sortant de l'enceinte sous vide du Dewar et destinés à être raccordés au circuit électronique de détection. A l'intérieur du Dewar est disposé le réfrigérateur qui comprend une bride 4 à tubulure de raccordement 5 avec un conduit d'alimentation non représenté relié à une source de fluide gazeux réfrigérant sous haute pression. Cette tubulure 5 forme aussi le bouchon d'extrémité d'un corps tubulaire 6 avec lequel elle est solidarisée, et autour duquel sont entourés en hélice deux conduits tubulaires 7 et 8 dont l'une des extrémités de chacun est reliée à la tubulure d'alimentation 5, en aval d'un filtre 9 inséré dans celle-ci, et dont l'autre extrémité de chacun est reliée, en bout du corps 6, à l'étrangleur 10 monté rentrant à l'intérieur de ce dernier. Cet étrangleur est ici réalisé conformément au brevet français FR-A-2 509 448 au nom de la demanderesse. Il comprend une buse 11 de forme tubulaire fermée à l'une de ses extrémités, constituant une chambre d'admission 12 à laquelle sont raccordées les extrémités des conduits tubulaires 7 et 8, et dans laquelle est disposé un noyau étrangleur 13 de moindre diamètre retenu un butée par une goupille 14, et présentant une rainure axiale 15. La buse débouche dans la chambre de détente et réfrigération 16 constituée par la partie interne du Dewar que n'occupe pas l'ensemble venant d'être décrit. On notera que les conduits tubulaires 7 et 8 sont engagés en contact étroit avec la paroi interne du Dewar. Pour obtenir de bonnes qualités d'échange thermique, en outre, les tubes 7, 8 et le corps 6 peuvent être étamés puis soudés par fusion de cet étamage établissant entre eux des cordons de contact. De manière connue, on peut aussi rapporter entre les spires des tubes 7, 8 des éléments de remplissage stockeurs de frigories. Le fluide réfrigérant après détente et liquéfaction dans la chambre 16, s'étendant jusqu'à l'intérieur du corps 6, est amené à sortir du Dewar vers l'atmosphère après échange thermique avec le fluide amené par les conduits 7 et 8, en s'écoulant dans les intervalles laissés libres entre ces deriners, le corps 6 et la paroi du Dewar, puis dans une chambre 17 ménagée entre l'ensemble 4, 5 et un tube 18 de protection du Dewar pourvu d'une collerette 19 de fixation avec la bride 4 et de trous évents latéraux 20. Entre le Dewar et son tube de protection est disposée une composition en élastomère destinée à mieux protéger le Dewar.

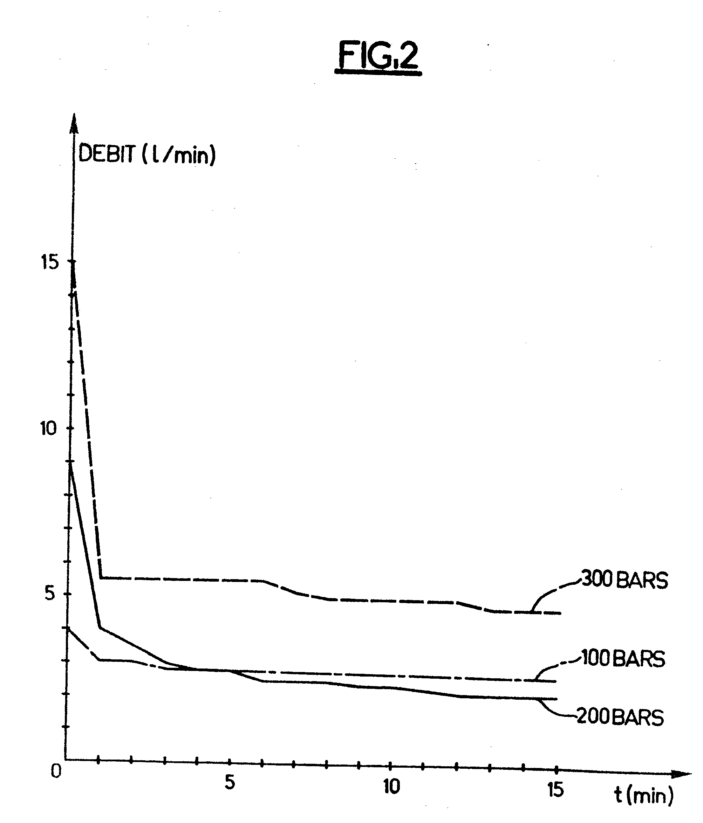

La régulation de débit du fluide dans l'étrangleur et donc la puissance frigorifique obtenue en fonctionnement résulte d'abord ici du choix pour la buse 11 et le noyau 13 de deux matériaux à coefficient de dilatation différent, par exemple buse en nickel et noyau en invar. Ainsi, avec une buse à coefficient de dilatation supérieur à celui du noyau, on peut obtenir en fonctionnement un débit initial relativement rapide du fluide réfrigérant sous la pression de sa source, par le choix d'un jeu initial prédéterminé existant à température ambinate entre la buse en le noyau, et qui va donc aller décroissant avec la température de réfrigération atteinte, jusqu'à une valeur de section de passage résiduelle minimale résultant du serrage de la buse sur le noyau et correspondant à la section de la rainure axiale 15. Selon la régulation perfectionnée objet de l'invention, cette section de passage et les relations d'échange thermique du réfrigérant avec les conduits 7 et 8 sont choisies telles qu'en phase de fonctionnement à ouverture minimale, une pahse de liquéfaction prend naissance dans le conduit d'amenée en amont de l'étrangleur, pour provoquer une auto-régulation du débit de fluide juste nécessaire à l'intretien de la liquéfaction dans la chambre de détente et liquéfaction, quelles que soient les conditions particulières de dissipation thermique dans l'environnement. Les diagrammes des fig. 2 à 4 vont permettre de mieux comprendre l'auto-régulation objet de l'invention, ces diagrammes étant tous indicateurs en ordonnée, du débit de fluide gazeux réfrigérant exprimé en litres/minute sous sa pression d'échappement du réfrigérateur légèrement supérieure à celle de l'atmosphère et en abscisse, du temps de mesure exprimé en minutes. Ils sont tous obtenus, sous les pressions indiquées pour chaque courbe, avec un dispositif du genre décrit comprenant une section minimale d'ouverture de l'étrangleur d'environ 500 μ au carré et deux tubes d'amenée de 0,25 × 0,5 mm, mais de longueur différente dans les divers diagrammes.

Le diagramme de la fig. 2 correspond à des courbes de mesure de débit établies avec un dispositif à deux tubes d'amenée d'une longueur approximative de 20 cm chacun, enroulés en 10 spires décalées autour du corps central 6, ces courbes étant respectivement établies pour des pressions de 300, 200 et 100 bars.

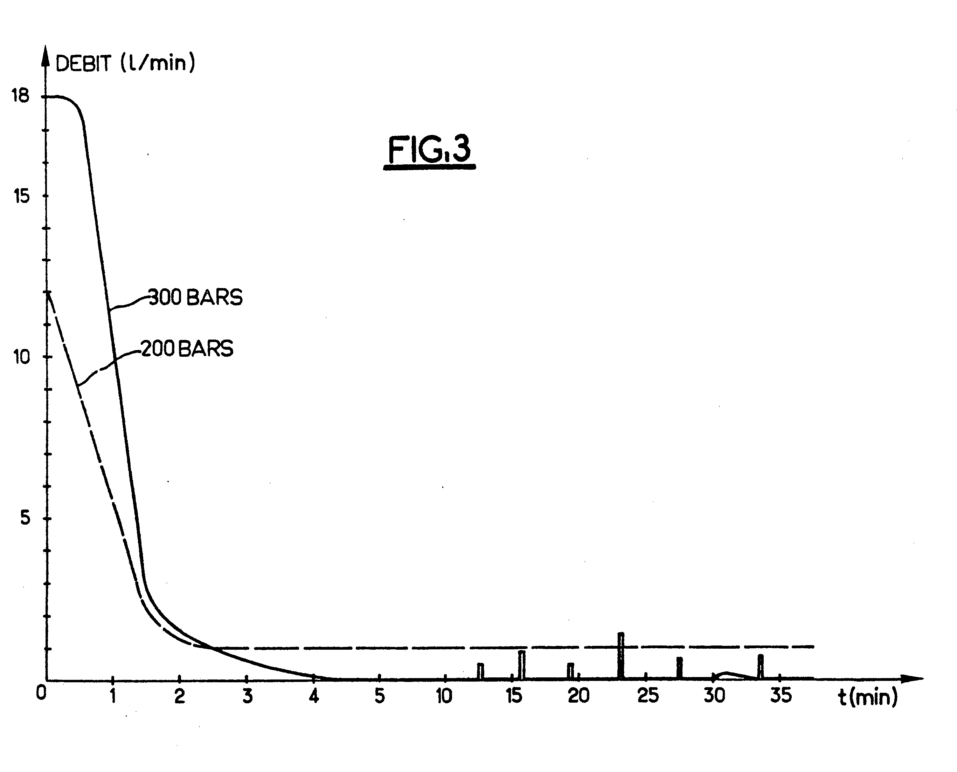

Le diagramme de la fig. 3 correspond à des courbes de mesure de débit étable avec un dispositif à deux tubes d'amenée d'une longueur approximative de 35 cm chacun, enroulés en 17,5 spires décalées autour du corps central, ces courbes étant respectivement établies pour des pressions de 300 et 200 bars.

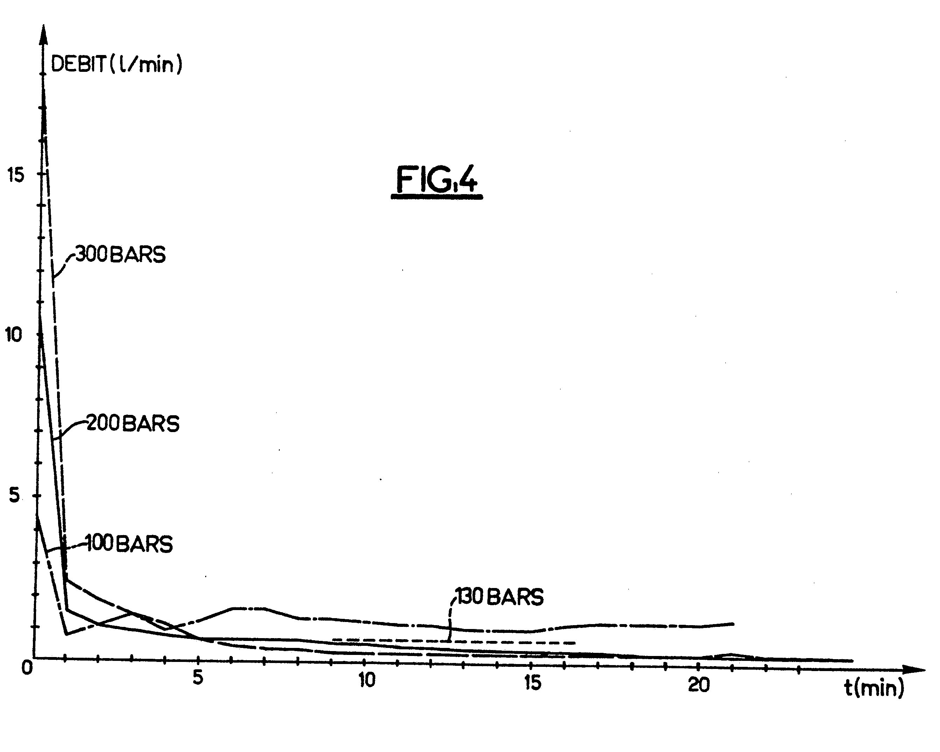

Le diagramme de la fig. 4 correspond à des courbes établies avec un dispositif à deux tubes d'amenée d'une longueur approximative de 26 cm chacun, enroulés en treize spires décalées autour du corps central, ces courbes étant établies pour des pressions de 300, 200 et 100 bars, avec tracé partiel intermédiaire à 130 bars.

L'examen comparatif de ces diagrammes permet de constater, entre les courbes de la fig. 2 et celle des fig. 3 et 4 que, le système de la fig. 2 produit le froid désiré à un régime d'entretien pour lequel il a un débit d'environ 5 litres à 300 bars, 2,3 litres à 200 bars et 2,7 litres à 100 bars, qui est bien supérieur au débit ressortant de la lecture des courbes analogues des fig. 3 et 4, ce qui s'explique par une insuffisance d'échange thermique entre la phase refroidie détendue et la phase gazeuse circulant dans les tubes d'amenée.

Le diagramme de la fig. 3 (dans lequel on notera qu'à partir de 5 minutes l'échelle de temps a été multipliée par 5) fait ressortir un cas indésirable avec la courbe de 300 bars, pour lequel le débit va jusqu'à s'annuler et ne reprend que périodiquement, comme si l'on était en présence d'une régulation du type tout ou rien, les périodes de débit nul se traduisant par une baisse fâcheuse et inacceptable de sensibilité de la cellule détectrice moins bien refroidie (ce que l'on constate en fonction de la valeur de courant qu'elle débite). Il est de fait dans ce cas qu'une phase liquéfiée a pris naissance dans les tubes d'amenée se trouvant au coeur du dispositif et n'en peut être chassée sous la pression de la source qu'après résorption de la phase liquéfiée en aval de l'orifice de détente. A 200 bars seulement, on obtient en revanche un fonctionnement satisfaisant de production du froid mais encore avec un débit d'entretien de 0,9 à 1 litre.

Le diagramme de la fig. 4 correspond à celui d'un dispositif établi avec une auto-régulation selon l'invention, pour lequel il y a entretien constant du froid requis et un débit d'entretien minimum à pression de fluide égale dans la gamme de 100 à 300 bars, avec plusieurs pressions intermédiaires telles qu'indiquées. Cette auto-régulation provient, ainsi qu'il a été dit, de la création d'une phase liquéfiée évolutive dans les tubes d'amenée en amont de l'étrangleur, non bloquante car pouvant toujours être refoulée par la pression d'amenée du gaz, et l'on constatera en particulier, qu'à l'inverse de ce qui ressort du diagramme de la fig. 2 où le débit d'entretien est d'autant plus important que la pression d'amenée est élevée, c'est avantageusement l'inverse qui se produit dans le cas du dispositif à auto-régulation selon l'invention. Cette auto-régulation est facilitée par l'emploi d'un conduit d'amenée multitubulaire, bitubulaire dans l'exemple décrit, ce qui n'est pas limitatif, étant à voir que pour une longueur et capacité d'échange thermique égale du conduit d'amenée, la division de celui-ci en plusieurs tubes entraîne pour une pression donnée moins de perte de charge au refoulement de la phase liquéfiée appelée à se former dans ces tubes en amont de l'étrangleur.

Bien entendu, diverses variantes de réalisation du dispositif proprement dit peuvent être imaginées tout en restant dans le cadre de l'invention.

## Revendications

1. Dispositif de régulation d'un réfrigérateur à effet Joule-Thomson comprenant un conduit d'amenée d'un fluide réfrigérant gazeux sous pression raccordé à un étrangleur débouchant dans une chambre de détente et liquéfaction du fluide communiquant avec un passage d'évacuation du fluide réfrigérant qui est en échange thermique avec ledit conduit d'amenée, ledit étrangleur étant à section de passage décroissante en fonction de l'abaissement de la température de réfrigération et à ouverture minimale de passage prédéterminée, caractérisé en ce que, pour le domaine de pression mis en jeu, l'ouverture minimale (15) de l'étrangleur (10) et les relations d'échange thermique avec le conduit d'amenée (7, 8) sont telles qu'en phase de fonctionnement à ouverture minimale une phase de liquéfaction prend naissance dans le conduit d'amenée en amont de l'étrangleur, pour provoquer une auto-régulation du débit de fluide juste nécessaire à l'entretien de la liquéfaction dans la chambre détente et liquéfaction.

2. Dispositif de régulation selon la revendication 1, caractérisé en ce que le conduit d'amenée est multitubulaire.

3. Dispositif de régulation selon l'une des revendications 1 ou 2, caractérisé en ce que l'étrangleur est constitué d'un corps tubulaire auquel est raccordé le conduit d'amenée et dans lequel est retenu un noyau y ménageant la section de passage régulée par différence de leur coefficient de dilatation, le passage d'ouverture minimale restant ménagé entre corps et noyau.

## Patentansprüche

1. Regelvorrichtung für eine nach dem Joule-Thomson-Effekt arbeitende Kühleinrichtung mit einer Zufuhrleitung für ein gasförmiges Kühlmedium unter Druck, die an eine Drossel angeschlossen ist, die ihrerseits in eine Entspannungs- und Verflüssigungskammer für das Medium mündet, die mit einer Entleerungsdurchgangsleitung für das Kühlmedium in Verbindung steht, die mit der genannten Zufuhrleitung in Wärmeaustausch steht, wobei die genannte Drossel einen in Abhängigkeit von der abnehmenden Kühltemperatur im Querschnitt abnehmenden Durchgang mit einer vorgegebenen kleinsten Öffnung hat, dadurch gekennzeichnet, daß für den Bereich des eingesetzten Drucks die kleinste Öffnung (15) der Drossel (10) und die Wärmeaustauschverhältnisse mit der Zufuhrleitung (7, 8) so sind, daß im Betrieb mit der kleinsten Öffnung in der Zufuhrleitung in Strömungsrichtung vor der Drossel eine Verflüssigungsphase entsteht, um für den Durchsatz des Mediums eine Selbstregelung hervorzurufen, die zur Selbsterhaltung der Verflüssigung in der Entspannungs- und Verflüssigungskammer eben ausreicht.

2. Regelvorrichtung gemäß Anspruch 1, dadurch gekennzeichnet, daß die Zufuhrleitung aus mehreren Rohren besteht.

3. Regelvorrichtung gemäß einem der Ansprüche 1 oder 2, dadurch gekennzeichnet, daß die Drossel aus einem rohrförmigen Körper besteht, an den die Zufuhrleitung angeschlossen ist, und in dem ein Kern festgehalten ist, der den durch den Unterschied der Ausdehnungskoeffizienten geregelten Durchgangsquerschnitt ausspart, wobei die kleinste Durchgangsöffnung zwischen Rohrkörper und Kern ausgespart bleibt.

## Claims

1. Device for regulating a refrigerator employing the Joule-Thomson effect, comprising a feed pipe for a gaseous refrigerant fluid under pressure, connected to a throttle-valve opening into a chamber for the expansion and liquefaction of the fluid communicating with a discharge channel for the refrigerant fluid which is in thermal exchange with the said feed pipe, the said throttle-valve having a passage cross-section which decreases in accordance with the fall in refrigeration temperatur and having a predetermined minimal passage aperture, characterised in that, for the range of pressure employed, the minimal aperture (15) of the throttle-valve (10) and the heat exchange relations with the feed pipe (7, 8) are such that in the phase of operation with minimal aperture a liquefaction phase occurs in the feed pipe upstream of the throttle-valve, so as to produce a self-regulation of the correct fluid flow rate required for maintaining liquefaction in the expansion and liquefaction chamber.

2. Regulating device according to claim 1, characterised in that the feed pipe is multitubular.

3. Regulating device according to one of claims 1 or 2, characterised in that the throttle-valve consists of a tubular body to which is connected the feed pipe and in which is held a core which there forms the passage cross-section which is regulated by the difference in the coefficients of expansion, the minimal passage aperture remaining formed between the body and the core.

# FIG.1

# FIG.2

FIG.3

0 084 308

FIG.4